# EUROPÄISCHE PATENTSCHRIFT

(11) **EP 3 473 025 B1**
(45) Veröffentlichungstag und Bekanntmachung des Hinweises auf die Patenterteilung: **05.08.2020**
(21) Anmeldenummer: 17732335.9
(22) Anmeldetag: 07.06.2017
(51) Int. Cl.: H04W 4/02, H04L 29/08

(54) **BEWEGUNGSABHÄNGIGE ÜBERTRAGUNG VON DATEN ZWISCHEN EINER HANDWERKZEUGMASCHINE UND EINER EXTERNEN EINHEIT**
MOVEMENT-DEPENDENT TRANSMISSION OF DATA BETWEEN A HAND-HELD MACHINE TOOL AND AN EXTERNAL UNIT
TRANSMISSION DE DONNÉES EN FONCTION DU MOUVEMENT ENTRE UNE MACHINE-OUTIL PORTATIVE ET UNE UNITÉ EXTERNE

(30) Priorität: 16.06.2016 DE 102016210765
(43) Veröffentlichungstag der Anmeldung: 24.04.2019
(73) Patentinhaber: Robert Bosch GmbH, 70442 Stuttgart (DE)
(72) Erfinder: SCHADOW, Joachim, 70563 Stuttgart (DE); STOCK, Joern, 70711 Leinfelden-Echterdingen (DE); ESENWEIN, Florian, 70771 Leinfelden-Echterdingen (DE); HESZLER, Anna, 71701 Schwieberdingen (DE)
(86) Internationale Anmeldenummer: PCT/EP2017/063812
(87) Internationale Veröffentlichungsnummer: WO 2017/215999

(56) Entgegenhaltungen:
- US-A1- 2005 000 998
- US-A1- 2012 317 489
- US-A1- 2014 240 125
- US-A1- 2015 136 829

## Beschreibung

### Stand der Technik

Es sind bereits Verfahren, wie beispielsweise ein Bluetooth-Verfahren o. dgl., zu einer, insbesondere drahtlosen, Übertragung von elektronischen Daten, insbesondere zwischen einer Handwerkzeugmaschine und einer externen Einheit bekannt. Bei den bereits bekannten Verfahren ist eine Kommunikationseinheit aktiv von einem Bediener aktivierbar, um eine Kommunikationsverbindung zwischen zwei Verbindungspartnern zu ermöglichen. Zudem ist bei einem Bluetooth-Verfahren von einem Bediener im Zuge eines ersten Verbindungsaufbaus aktiv ein Code eingebbar, um eine Verbindung zur Übertragung von elektronischen Daten zwischen zwei Verbindungspartnern zu verifizieren.

Aus der US 2014/240125 A1 ist weiterhin ein Verfahren zu einer drahtlosen Übertragung von elektronischen Daten zwischen den Kommunikationseinheiten einer Handwerkzeugmaschine und einer externen Einheit bekannt, wobei in einem Verfahrensschritt die Kommunikationseinheiten zur Übertragung der elektronischen Daten in Abhängigkeit von einem Beschleunigungswert und/oder einer Änderung einer Positionskenngröße der Kommunikationseinheiten automatisch aktiviert werden. Die US 2012/317489 A1 offenbart ferner ein Bluetooth-Gerät, das ein anderes Gerät abhängig von einer Signalstärke bzw. Entfernung auswählt.

### Offenbarung der Erfindung

Die Erfindung geht aus von einem Verfahren zu einer drahtlosen Übertragung von elektronischen Daten zwischen einer Kommunikationseinheit einer als ein erster Verbindungspartner ausgebildeten Handwerkzeugmaschine und einer Kommunikationseinheit einer als ein zweiter Verbindungspartner ausgebildeten externen Einheit.

In einem Verfahrensschritt wird die Kommunikationseinheit der Handwerkzeugmaschine zur Übertragung der elektronischen Daten in Abhängigkeit von einem Beschleunigungswert und/oder einer Änderung einer Positionskenngröße der Kommunikationseinheit automatisch aktiviert, und in einem weiteren Verfahrensschritt wird die Kommunikationseinheit der externen Einheit zur Übertragung der elektronischen Daten in Abhängigkeit von einem Beschleunigungswert und/oder einer Änderung einer Positionskenngröße der Kommunikationseinheit automatisch aktiviert. Darunter, dass eine "Kommunikationseinheit zur Übertragung der elektronischen Daten in Abhängigkeit von einer Bewegungskenngröße der Kommunikationseinheit automatisch aktiviert wird" soll insbesondere verstanden werden, dass die Kommunikationseinheit in Abhängigkeit von einer Bewegungskenngröße der Kommunikationseinheit automatisch, insbesondere entkoppelt von einer durch einen Bediener hervorgerufenen manuellen Aktivierung, wie beispielsweise durch eine Betätigung eines Bedienelements o. dgl., zumindest von einem Stand-by-Betrieb in einen aktiven Betrieb überführt, insbesondere geschaltet, wird. Vorzugsweise wird die Kommunikationseinheit automatisch infolge einer Bewegung der Kommunikationseinheit, insbesondere infolge einer Bewegung im Raum, aus einem Stand-by-Betrieb in einen aktiven Kommunikationsbetrieb geschaltet, insbesondere unabhängig von einer manuellen Aktivierung infolge einer Betätigung eines Bedienelements durch einen Bediener. Bevorzugt wird das Verfahren bei einer erstmaligen Verbindungsaufnahme, insbesondere bei einem erstmaligen Pairing, von zumindest zwei Verbindungspartnern durchgeführt. Es ist jedoch auch denkbar, dass das Verfahren alternativ oder zusätzlich immer bei einer Verbindungsaufnahme von zumindest zwei Verbindungspartnern durchgeführt wird, insbesondere unabhängig davon, ob bereits in der Vergangenheit eine Verbindung zwischen zumindest zwei Verbindungspartnern bestand. Bevorzugt wird in zumindest einem Verfahrensschritt infolge eines Zustandekommens einer Verbindung zwischen zumindest zwei Verbindungspartnern eine elektronische Liste geführt, in der jedem Verbindungspartner eine eindeutige Identifizierung zugewiesen wird, wie beispielsweise durch eine Speicherung einer IP-Adresse, einer MAC-Adresse o. dgl.

In einem Verfahrensschritt erfolgt, falls es für eine Kommunikationseinheit noch mehr potentielle Verbindungspartner gäbe, eine Auswahl eines Verbindungspartners aus den potentiellen Verbindungspartnern in Abhängigkeit von der Signaldämpfung und/oder dem Abstand zwischen einem jeweiligen potentiellen Verbindungspartner und einer Kommunikationseinheit. In einem Verfahrensschritt wird eine Verbindung zwischen den Kommunikationseinheiten aufgebaut und in einem Verfahrensschritt ein Abgleich eines Bewegungskenngrößenprofils der Kommunikationseinheit mit einem Bewegungskenngrößenprofil der Kommunikationseinheit durchgeführt. Schließlich erfolgt in einem Verfahrensschritt in Abhängigkeit von einer Auswertung des Abgleichs eine Beibehaltung oder Trennung der Kommunikationsverbindung der Verbindungspartner.

Unter einem "Bewegungskenngrößenprofil" soll insbesondere ein Profil von erfassten Bewegungskenngrößen über die Zeit verstanden werden. Vorzugsweise kann anhand eines Abgleichs von Bewegungskenngrößenprofilen, insbesondere nach einer Verbindung von zumindest zwei Verbindungspartnern, erkannt werden, ob eine im Wesentlichen synchrone Bewegung der zumindest zwei Verbindungspartner erfolgt, ob eine weitgehende Übereinstimmung mit einem Aufenthaltsort der Verbindungspartner besteht o. dgl. Mittels der erfindungsgemäßen Ausgestaltung kann vorteilhaft einfach eine Überprüfung einer korrekten Zuordnung zwischen Verbindungspartnern ermöglicht werden. Es kann vorteilhaft eine zuverlässige Zuordnung von Verbindungspartnern erreicht werden. Sollte anhand des Abgleichs der Bewegungskenngrößenprofile erkannt werden, dass die Bewegungskenngrößenprofile starke Abweichungen voneinander aufweisen, kann automatisch eine Verbindung zwischen den Verbindungspartnern getrennt werden, um beispielsweise eine neue Verbindungsanfrage zu senden, insbesondere an einen Verbindungspartner, dessen Bewegungskenngrößenprofil zumindest zum Großteil mit einem Bewegungskenngrößenprofil der Kommunikationseinheit übereinstimmt. Mittels der erfindungsgemäßen Ausgestaltung kann vorteilhaft eine automatische Trennung oder Beibehaltung einer Verbindung zwischen zwei Verbindungspartnern in Abhängigkeit von einer gemeinsamen Bewegung der Verbindungspartner erreicht werden.

Eine Auswahl eines Verbindungspartners kann in Abhängigkeit von einer Entfernungskenngröße, die einen geringsten Wert im Vergleich zu Werten von weiteren Entfernungskenngrößen von weiteren potentiellen Verbindungspartnern aufweist, erfolgen. Beispielsweise ist es denkbar, dass eine Verbindungsanfrage an einen Verbindungspartner von mehreren potentiellen Verbindungspartnern gesendet wird, der den geringsten Abstand und/oder die geringste Signaldämpfung im Vergleich zu weiteren potentiellen Verbindungspartnern relativ zur Kommunikationseinheit aufweist. Mittels der erfindungsgemäßen Ausgestaltung kann vorteilhaft zuverlässig eine Verbindungsanfrage an einen nächstliegenden Verbindungspartner gesendet werden.

Bewegungskenngrößen können in Form von Bewegungsstrecken, Beschleunigungswerten, globalen und/oder stationären Positionskenngrößen o. dgl. in einem Speicher abgelegt werden. Bevorzugt sind die abgelegten Bewegungskenngrößen zu einer Auswertung nutzbar, zu einem Abgleich, zu einem Plausibilitätsabgleich o. dgl. von einer Elektronikeinheit, insbesondere von einer Elektronikeinheit der Handwerkzeugmaschine und/oder der externen Einheit, verarbeitbar. Insbesondere sind die abgelegten Bewegungskenngrößen zu einer Auswertung im Hinblick auf eine Nutzungsdauer, eine Arbeitszeit oder anderen, einem Fachmann als sinnvoll erscheinenden Auswertungskenngrößen von der Elektronikeinheit verarbeitbar. Bevorzugt sind die abgelegten Bewegungskenngrößen mittels der Kommunikationseinheit an die externe Einheit, wie beispielsweise eine Cloud, eine Firmenzentrale, ein Smartphone o. dgl., übertragbar. Mittels der erfindungsgemäßen Ausgestaltung kann vorteilhaft eine Aufzeichnung von Bewegungskenngrößen, insbesondere von Bewegungskenngrößen der Kommunikationseinheit, realisiert werden, die beispielsweise zu einer Standorterfassung, einer Erzeugung eines Bewegungskenngrößenprofils o. dgl. nutzbar sind.

Unter der Wendung "drahtlose Übertragung" soll insbesondere verstanden werden, dass elektronische Daten über einen vorteilhaft körperlosen Informationsträger, beispielsweise über Schallwellen, Lichtwellen und/oder vorzugsweise Funkwellen, übertragen werden, insbesondere entkoppelt von einer physischen Verbindung zwischen Verbindungspartnern. Bevorzugt ist die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit, als Zigbee-Kommunikationseinheit o. dgl. ausgebildet. Alternativ ist es auch denkbar, dass die Kommunikationseinheit zu einer kabelgebundenen und/oder zu einer drahtlosen Übertragung von elektronischen Daten an eine externe Einheit vorgesehen ist. Besonders bevorzugt ist die Kommunikationseinheit zu einer drahtlosen Übertragung von elektronischen Daten an eine externe Einheit und zu einer kabelgebundenen Übertragung von elektronischen Daten an eine oder mehrere maschineninterne Elektronikeinheit/en vorgesehen. Weitere, einem Fachmann als sinnvoll erscheinende Ausgestaltungen der Kommunikationseinheit sind ebenfalls denkbar.

Die externe Einheit kann als Smartphone, als Personal-Computer, als Laptop, als Netbook, als Tablet, als Firmenzentralrechner, als Uhr, als elektronisches Armband, als Ausgabeeinheit, wie beispielsweise als Lautsprecher, als Arbeitskleidung, als Schutzbrille, als Schutzhelm oder als eine andere, einem Fachmann als sinnvoll erscheinende externe Einheit ausgebildet sein. Bei einer Ausgestaltung als Smartphone, als Personal-Computer, als Laptop, als Netbook oder als Tablet ist vorzugsweise eine App zu einer Kommunikation mit der Kommunikationseinheit vorgesehen. Es ist jedoch auch denkbar, dass die externe Einheit als externe, transportable Bedieneinheit, als fest installierte Bedieneinheit an einem Arbeitsplatz eines Bedieners, als fest in einem Raum installierte Synchronisationseinheit eines Einsatzortes, die von einer Zentrale gesteuert werden kann, wie beispielsweise infolge von Firmenvorgaben/Sicherheitsbestimmungen, als Körperkenngrößenüberwachungseinheit oder als weitere, einem Fachmann als sinnvoll erscheinende zentrale oder dezentrale Bedieneinheit, Eingabestation und/oder zentrales oder dezentrales Terminal ausgebildet ist.

Mittels der erfindungsgemäßen Ausgestaltung kann vorteilhaft ein komfortables Verfahren zu einer Übertragung von elektronischen Daten zwischen zumindest zwei Verbindungspartnern realisiert werden. Zudem kann vorteilhaft mittels der erfindungsgemäßen Ausgestaltung ein hoher Bedienkomfort realisiert werden, da eine manuelle Betätigung eines Bedienelements zu einer Aktivierung der Kommunikationseinheit entfallen kann. Es kann vorteilhaft sichergestellt werden, dass eine Verbindung zwischen zwei Verbindungspartnern, insbesondere zwischen der Handwerkzeugmaschine und der externen Einheit, zuverlässig aufgebaut wird, insbesondere zu einem Datenabgleich, zu einer Bedienerüberwachung, zu einer Arbeitszeiterfassung o. dgl.

Ferner wird vorgeschlagen, dass in einem Verfahrensschritt nach einer Aktivierung zumindest einer der Kommunikationseinheiten in Abhängigkeit von einem Zeitintervall, in dem der Beschleunigungswert und/oder die Änderung der lokalen und/oder globalen Positionskenngröße erfasst wird, eine Verbindungsanfrage mittels der Kommunikationseinheit gesendet wird. Wird beispielsweise innerhalb eines Zeitintervalls von mehr als 1 Sekunde, vorzugsweise von mehr als 2 Sekunden und besonders bevorzugt von mehr als 10 Sekunden eine Bewegungskenngröße der Kommunikationseinheit erfasst, wird mittels der Kommunikationseinheit eine Verbindungsanfrage gesendet, insbesondere zu einem Aufbau einer Verbindung mit zumindest einem in einer Nähe der Kommunikationseinheit befindlichen Verbindungspartner. Mittels der erfindungsgemäßen Ausgestaltung kann vorteilhaft ein Senden von Verbindungsanfragen infolge von kleinen Erschütterungen der Kommunikationseinheit weitestgehend vermieden werden. Es kann vorteilhaft ein energieeffizientes automatisch ablaufendes Verfahren realisiert werden.

Zudem wird vorgeschlagen, dass in zumindest einem Verfahrensschritt ein Abgleich von zumindest einer Zeitkenngröße erfolgt. Die Zeitkenngröße kann als Arbeitszeit, als Uhrzeit, als Nutzungszeit, als Betriebszeit o. dgl. ausgebildet sein, die automatisch erfasst wird und die insbesondere zusammen mit Bewegungskenngrößen gespeichert wird. Beispielsweise ist es denkbar, dass eine Betriebszeit der Kommunikationseinheit ausgehend von einer Aktivierung der Kommunikationseinheit erfasst wird und mit einer Betriebszeit eines Verbindungspartners abgeglichen wird o. dgl. Mittels der erfindungsgemäßen Ausgestaltung kann vorteilhaft eine Zuordnung von Verbindungspartnern in Abhängigkeit von einer Zeitkenngröße, insbesondere von einer gemeinsamen Betriebszeit oder Nutzungszeit, ermöglicht werden. Es kann vorteilhaft eine redundante Zeiterfassung, die zu einer Arbeitszeiterfassung nutzbar ist, ermöglicht werden.

Des Weiteren wird vorgeschlagen, dass in Abhängigkeit von einem Status einer Kommunikationsverbindung zwischen zumindest einem Verbindungspartner und zumindest einem weiteren Verbindungspartner eine Übertragung von elektronischen Daten an zumindest einen zusätzlichen Verbindungspartner erfolgt. Beispielsweise können bei einer Verbindung zwischen einer Handwerkzeugmaschine und einer externen Einheit zusätzliche Daten von oder an eine Firmenzentrale übertragen werden. Es können Informationen im Hinblick auf Aufträge, Arbeitszeit, Emissionsgrenzen o. dgl. an die Handwerkzeugmaschine und/oder an die externe Einheit übertragen werden und/oder von der Firmenzentrale ausgewertet werden. Mittels der erfindungsgemäßen Ausgestaltung kann vorteilhaft eine zuverlässige Datenaktualisierung und/oder eine Datensicherung ermöglicht werden. Es kann vorteilhaft eine Auswertung von elektronischen Daten ermöglicht werden, die während einer Verbindung zwischen dem Verbindungspartner und dem weiteren Verbindungspartner übertragen werden.

Ferner wird vorgeschlagen, dass in einem Verfahrensschritt eine Deaktivierung der Kommunikationseinheiten in Abhängigkeit von einem Zeitintervall erfolgt, in dem eine Erfassung der Beschleunigungswerte und/oder Änderung der lokalen und/oder globalen Positionskenngrößen der Verbindungspartner ausbleibt. Wird beispielsweise innerhalb eines Zeitintervalls von mehr als 1 Sekunde, vorzugsweise von mehr als 2 Sekunden und besonders bevorzugt von mehr als 10 Sekunden keine Bewegungskenngröße erfasst, wird die Kommunikationseinheit deaktiviert, insbesondere in einen Stand-by-Betrieb geschalten. Mittels der erfindungsgemäßen Ausgestaltung kann vorteilhaft eine energiesparende Ausgestaltung realisiert werden.

Das erfindungsgemäße Verfahren soll nicht auf die oben beschriebene Anwendung und Ausführungsform beschränkt sein. Insbesondere kann das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine erfindungsgemäße Vorrichtung zu einer Übertragung von elektronischen Daten in einer schematischen Darstellung,
- Fig. 2: einen Verfahrensablauf eines erfindungsgemäßen Verfahrens bei einer Handwerkzeugmaschine in einer schematischen Darstellung und
- Fig. 3: einen Verfahrensablauf des erfindungsgemäßen Verfahrens bei einer externen Einheit, die mit der Handwerkzeugmaschine zu einem Austausch von elektronischen Daten kommuniziert, in einer schematischen Darstellung.

### Beschreibung des Ausführungsbeispiels

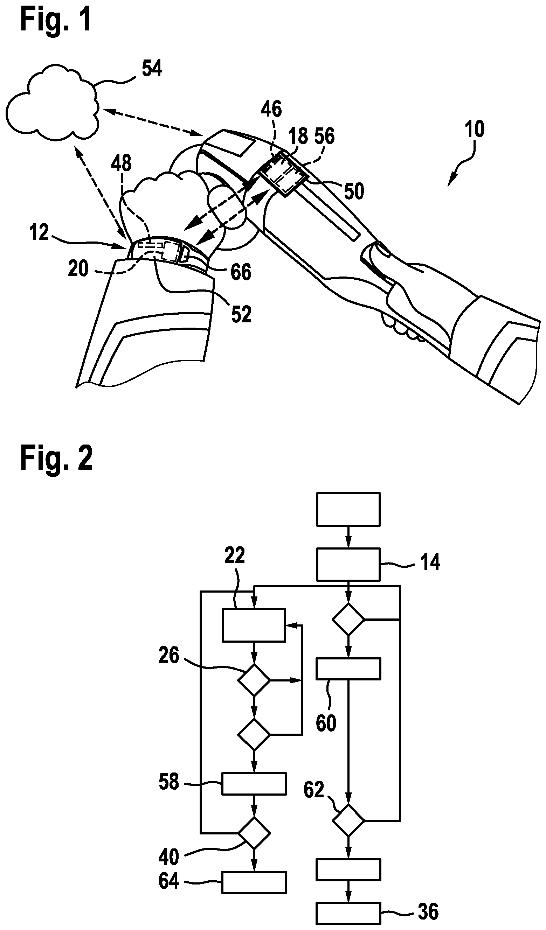

Figur 1 zeigt eine Handwerkzeugmaschine 10 und eine externe Einheit 12, die zu einem Austausch von elektronischen Daten miteinander kommunizieren, insbesondere drahtlos miteinander kommunizieren. Die Handwerkzeugmaschine 10 ist in dem in Figur 1 dargestellten Ausführungsbeispiel als Winkelschleifer ausgebildet. Es ist jedoch auch denkbar, dass die Handwerkzeugmaschine 10 eine andere, einem Fachmann als sinnvoll erscheinende Ausgestaltung aufweist, wie beispielsweise eine Ausgestaltung als Bohrmaschine, als Akkuschrauber, als Kreissäge, als Bohrhammer, als Stichsäge, als Elektrohobel o. dgl. Die Handwerkzeugmaschine 10 weist eine, einem Fachmann zumindest im Wesentlichen bekannte Ausgestaltung auf. Die Handwerkzeugmaschine 10 umfasst zumindest eine Vorrichtung 50, die zumindest eine Kommunikationseinheit 18 aufweist, die zu einer Übertragung von elektronischen Daten vorgesehen ist. Die Kommunikationseinheit 18 der Handwerkzeugmaschine 10 ist als drahtlose Kommunikationseinheit ausgebildet. Es ist jedoch auch denkbar, dass die Kommunikationseinheit 18 der Handwerkzeugmaschine 10 alternativ oder zusätzlich als kabelgebundene Kommunikationseinheit ausgebildet ist. Die Vorrichtung 50 der Handwerkzeugmaschine 10 ist als Handwerkzeugmaschinenvorrichtung ausgebildet. Vorzugsweise ist die Vorrichtung 50 der Handwerkzeugmaschine 10 in die Handwerkzeugmaschine 10 integriert. Es ist jedoch auch denkbar, dass die Vorrichtung 50 der Handwerkzeugmaschine 10 abnehmbar an der Handwerkzeugmaschine 10 anordenbar ist. Die Vorrichtung 50 der Handwerkzeugmaschine 10 umfasst zumindest die Kommunikationseinheit 18 der Handwerkzeugmaschine 10 und zumindest eine Aktivierungseinheit 46, die dazu vorgesehen ist, die Kommunikationseinheit 18 der Handwerkzeugmaschine 10 in Abhängigkeit von zumindest einer Bewegungskenngröße der Kommunikationseinheit 18 der Handwerkzeugmaschine 10 automatisch zu aktivieren.

Die externe Einheit 12 kann als Smartphone, als Personal-Computer, als Laptop, als Netbook, als Tablet, als Firmenzentralrechner, als Uhr, als elektronisches Armband, als Ausgabeeinheit, wie beispielsweise als Lautsprecher, als Arbeitskleidung, als Schutzbrille, als Schutzhelm oder als eine andere, einem Fachmann als sinnvoll erscheinende externe Einheit ausgebildet sein. In dem in Figur 1 dargestellten Ausführungsbeispiel ist die externe Einheit 12 als elektronisches Armband ausgebildet. Die externe Einheit 12 umfasst zumindest eine Vorrichtung 52, die zumindest eine Kommunikationseinheit 20 aufweist, die zu einer Übertragung von elektronischen Daten vorgesehen ist. Die Kommunikationseinheit 20 der externen Einheit 12 ist als drahtlose Kommunikationseinheit ausgebildet. Es ist jedoch auch denkbar, dass die Kommunikationseinheit 20 der externen Einheit 12 alternativ oder zusätzlich als kabelgebundene Kommunikationseinheit ausgebildet ist. Die Vorrichtung 52 der externen Einheit 12 umfasst zumindest die Kommunikationseinheit 20 der externen Einheit 12 und zumindest eine Aktivierungseinheit 48, die dazu vorgesehen ist, die Kommunikationseinheit 20 der externen Einheit 12 in Abhängigkeit von zumindest einer Bewegungskenngröße der Kommunikationseinheit 20 der externen Einheit 12 automatisch zu aktivieren.

Die Handwerkzeugmaschine 10 und die externe Einheit 12 sind mittels der Kommunikationseinheit 18 der Handwerkzeugmaschine 10 und der Kommunikationseinheit 20 der externen Einheit 12 zu einer Übertragung von elektronischen Daten datentechnisch miteinander verbunden. Die Handwerkzeugmaschine 10 und die externe Einheit 12 sind Verbindungspartner. Die Handwerkzeugmaschine 10 kann mittels der Kommunikationseinheit 18 der Handwerkzeugmaschine 10 datentechnisch mit einem zusätzlichen Verbindungspartner 54, wie beispielsweise einer Cloud, einer Firmenzentrale o. dgl., verbunden sein, um elektronische Daten auszutauschen. Die externe Einheit 12 kann mittels der Kommunikationseinheit 20 der externen Einheit 12 datentechnisch mit dem zusätzlichen Verbindungspartner 54 verbunden sein, um elektronische Daten auszutauschen.

Figur 2 zeigt einen Verfahrensablauf eines Verfahrens zu einer Übertragung von elektronischen Daten zwischen der Handwerkzeugmaschine 10 und der externen Einheit 12 bei der Handwerkzeugmaschine 10. Das Verfahren zu einer, insbesondere drahtlosen, Übertragung von elektronischen Daten zwischen der Handwerkzeugmaschine 10 und der externen Einheit 12 umfasst zumindest einen Verfahrensschritt 14, in dem die Kommunikationseinheit 18 der Handwerkzeugmaschine 10 zur Übertragung der elektronischen Daten in Abhängigkeit von einer Bewegungskenngröße der Kommunikationseinheit 18 der Handwerkzeugmaschine 10 automatisch aktiviert wird. Die Handwerkzeugmaschine 10 umfasst insbesondere eine Bewegungssensoreinheit 56, die dazu vorgesehen ist, zumindest Bewegungskenngrößen der Kommunikationseinheit 18 der Handwerkzeugmaschine 10 zu erfassen (Figur 1). Die Bewegungssensoreinheit 56 der Handwerkzeugmaschine 10 ist insbesondere dazu vorgesehen, einen Beschleunigungswert der Kommunikationseinheit 18 der Handwerkzeugmaschine 10 und/oder eine lokale und/oder globale Positionskenngröße der Kommunikationseinheit 18 der Handwerkzeugmaschine 10 zu erfassen. Die Bewegungssensoreinheit 56 der Handwerkzeugmaschine 10 ist insbesondere datentechnisch mit der Aktivierungseinheit 46 der Vorrichtung 50 der Handwerkzeugmaschine 10 verbunden. Die Kommunikationseinheit 18 der Handwerkzeugmaschine 10 wird in zumindest einem Verfahrensschritt 14 in Abhängigkeit von einem Beschleunigungswert der Kommunikationseinheit 18 der Handwerkzeugmaschine 10 und/oder in Abhängigkeit von einer Änderung einer lokalen und/oder globalen Positionskenngröße der Kommunikationseinheit 18 der Handwerkzeugmaschine 10 automatisch aktiviert, insbesondere von einem Stand-by-Betrieb in einen aktiven Betrieb überführt, insbesondere geschalten.

In zumindest einem Verfahrensschritt 22 erfolgt eine Aufzeichnung von Bewegungskenngrößen der Kommunikationseinheit 18 der Handwerkzeugmaschine 10. Die Vorrichtung 50 der Handwerkzeugmaschine 10 umfasst eine Speichereinheit (hier nicht näher dargestellt), in der zumindest die Bewegungskenngrößen der Kommunikationseinheit 18 der Handwerkzeugmaschine 10 speicherbar sind. In zumindest einem Verfahrensschritt 26, insbesondere nach einer Aktivierung der Kommunikationseinheit 18 der Handwerkzeugmaschine 10, wird ein Vorhandensein von Bewegungskenngrößen der Kommunikationseinheit 18 der Handwerkzeugmaschine 10 in Abhängigkeit von einem Zeitintervall überprüft. Wird beispielsweise innerhalb eines Zeitintervalls von mehr als 1 Sekunde, vorzugsweise von mehr als 2 Sekunden und besonders bevorzugt von mehr als 10 Sekunden eine Bewegungskenngröße der Kommunikationseinheit 18 der Handwerkzeugmaschine 10 erfasst, wird die Kommunikationseinheit 18 der Handwerkzeugmaschine 10 im aktiven Betrieb belassen. Wird beispielsweise innerhalb eines Zeitintervalls von mehr als 1 Sekunde, vorzugsweise von mehr als 2 Sekunden und besonders bevorzugt von mehr als 10 Sekunden keine Bewegungskenngröße der Kommunikationseinheit 18 der Handwerkzeugmaschine 10 erfasst, wird die Kommunikationseinheit 18 der Handwerkzeugmaschine 10 in den Stand-by-Betrieb überführt. In zumindest einem Verfahrensschritt 58 werden den erfassten Bewegungskenngrößen der Kommunikationseinheit 18 der Handwerkzeugmaschine 10 Zeitkenngrößen zugeordnet und abgespeichert. Es kann vorteilhaft dokumentiert werden wann, wie weit und/oder wohin die Kommunikationseinheit 18 der Handwerkzeugmaschine 10 bewegt wurde. Die erfassten Bewegungskenngrößen der Kommunikationseinheit 18 der Handwerkzeugmaschine 10 können in zumindest einem Verfahrensschritt 60 als Überwachungsparameter genutzt werden, insbesondere zu einer Überwachung eines Vorhandenseins einer Bewegung.

In zumindest einem Verfahrensschritt 62 wird ein Vorhandensein einer Verbindungsanfrage, insbesondere der Kommunikationseinheit 20 der externen Einheit 12, überprüft. Ist keine Verbindungsanfrage vorhanden und wird keine Bewegung erfasst, insbesondere innerhalb eines Zeitintervalls von mehr als 1 Sekunde, wird die Kommunikationseinheit 18 der Handwerkzeugmaschine 10 in zumindest einem Verfahrensschritt 64 von einem aktiven Betrieb in einen Stand-by-Betrieb überführt.

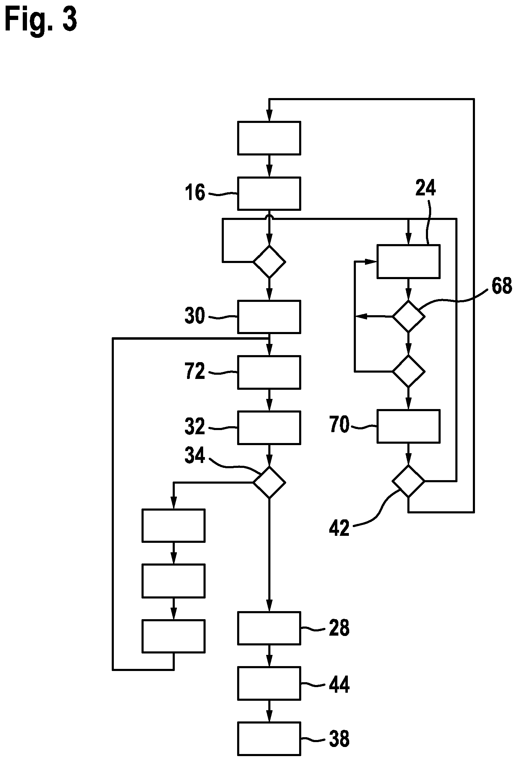

Figur 3 zeigt einen Verfahrensablauf eines Verfahrens zu einer Übertragung von elektronischen Daten zwischen der Handwerkzeugmaschine 10 und der externen Einheit 12 bei der externen Einheit 12. Das Verfahren zu einer, insbesondere drahtlosen, Übertragung von elektronischen Daten zwischen der Handwerkzeugmaschine 10 und der externen Einheit 12 umfasst zumindest einen Verfahrensschritt 16, in dem die Kommunikationseinheit 20 der externen Einheit 12 zur Übertragung der elektronischen Daten in Abhängigkeit von einer Bewegungskenngröße der Kommunikationseinheit 20 der externen Einheit 12 automatisch aktiviert wird. Die externe Einheit 12 umfasst insbesondere eine Bewegungssensoreinheit 66, die dazu vorgesehen ist, zumindest Bewegungskenngrößen der Kommunikationseinheit 20 der externen Einheit 12 zu erfassen (Figur 1). Die Bewegungssensoreinheit 66 der externen Einheit 12 ist insbesondere dazu vorgesehen, einen Beschleunigungswert der Kommunikationseinheit 20 der externen Einheit 12 und/oder eine lokale und/oder globale Positionskenngröße der Kommunikationseinheit 20 der externen Einheit 12 zu erfassen. Die Bewegungssensoreinheit 66 der externen Einheit 12 ist insbesondere datentechnisch mit der Aktivierungseinheit 48 der Vorrichtung 52 der externen Einheit 12 verbunden. Die Kommunikationseinheit 20 der externen Einheit 12 wird in zumindest einem Verfahrensschritt 14 in Abhängigkeit von einem Beschleunigungswert der Kommunikationseinheit 20 der externen Einheit 12 und/oder in Abhängigkeit von einer Änderung einer lokalen und/oder globalen Positionskenngröße der Kommunikationseinheit 20 der externen Einheit 12 automatisch aktiviert, insbesondere von einem Stand-by-Betrieb in einen aktiven Betrieb überführt, insbesondere geschalten.

In zumindest einem Verfahrensschritt 24 erfolgt eine Aufzeichnung von Bewegungskenngrößen der Kommunikationseinheit 20 der externen Einheit 12. Die Vorrichtung 52 der externen Einheit 12 umfasst eine Speichereinheit (hier nicht näher dargestellt), in der zumindest die Bewegungskenngrößen der Kommunikationseinheit 20 der externen Einheit 12 speicherbar sind.

In zumindest einem Verfahrensschritt 68, insbesondere nach einer Aktivierung der Kommunikationseinheit 18 der Handwerkzeugmaschine 10, wird ein Vorhandensein von Bewegungskenngrößen der Kommunikationseinheit 20 der externen Einheit 12 in Abhängigkeit von einem Zeitintervall überprüft. Wird beispielsweise innerhalb eines Zeitintervalls von mehr als 1 Sekunde, vorzugsweise von mehr als 2 Sekunden und besonders bevorzugt von mehr als 10 Sekunden eine Bewegungskenngröße der Kommunikationseinheit 20 der externen Einheit 12 erfasst, wird die der Kommunikationseinheit 20 der externen Einheit 12 im aktiven Betrieb belassen. Wird beispielsweise innerhalb eines Zeitintervalls von mehr als 1 Sekunde, vorzugsweise von mehr als 2 Sekunden und besonders bevorzugt von mehr als 10 Sekunden keine Bewegungskenngröße der Kommunikationseinheit 20 der externen Einheit 12 erfasst, wird die Kommunikationseinheit 20 der externen Einheit 12 in den Stand-by-Betrieb überführt. In zumindest einem Verfahrensschritt 70 werden den erfassten Bewegungskenngrößen der Kommunikationseinheit 20 der externen Einheit 12 Zeitkenngrößen zugeordnet und abgespeichert. Es kann vorteilhaft dokumentiert werden wann, wie weit und/oder wohin die Kommunikationseinheit 20 der externen Einheit 12 bewegt wurde. In zumindest einem Verfahrensschritt 28, insbesondere nach einer Aktivierung der Kommunikationseinheit 20 der externen Einheit 12, wird, insbesondere automatisch, in Abhängigkeit von einem Zeitintervall, insbesondere von einem Zeitintervall, in dem Bewegungskenngrößen erfasst werden, eine Verbindungsanfrage mittels der Kommunikationseinheit 20 der externen Einheit 12, insbesondere drahtlos, gesendet, insbesondere an die Kommunikationseinheit 18 der Handwerkzeugmaschine 10.

In zumindest einem Verfahrensschritt 30 erfolgt zumindest in Abhängigkeit von zumindest einer Entfernungskenngröße eine Auswahl eines Verbindungspartners, insbesondere der Handwerkzeugmaschine 10. Vorzugsweise wird der Verbindungspartner mit dem geringsten Abstand und/oder mit der geringsten Signaldämpfung relativ zur Kommunikationseinheit 20 der externen Einheit 12 ausgewählt. In zumindest einem Verfahrensschritt 72 wird dem Verbindungspartner eine Kennung, wie beispielsweise n+1, zugewiesen, die insbesondere in der Speichereinheit der Vorrichtung 52 der externen Einheit 12 abgespeichert wird. Es kann vorteilhaft eine eindeutige Zuweisung bei einem erneuten Verbindungsaufbau erfolgen.

In zumindest einem Verfahrensschritt 32 erfolgt ein Abgleich von Bewegungskenngrößenprofilen, insbesondere ein Abgleich eines Bewegungskenngrößenprofils der Kommunikationseinheit 18 der Handwerkzeugmaschine 10 mit einem Bewegungskenngrößenprofil der Kommunikationseinheit 20 der externen Einheit 12. In zumindest einem Verfahrensschritt 34 erfolgt in Abhängigkeit von einer Auswertung des Abgleichs der Bewegungskenngrößenprofile eine Beibehaltung einer Kommunikationsverbindung oder eine Trennung einer Kommunikationsverbindung. Sollte beispielsweise anhand des Abgleichs der Bewegungskenngrößenprofile erkannt werden, dass die Bewegungskenngrößenprofile starke Abweichungen voneinander aufweisen, kann automatisch eine Verbindung zwischen den Verbindungspartnern getrennt werden, um beispielsweise eine neue Verbindungsanfrage an einen anderen potentiellen Verbindungspartner zu senden. Wird anhand des Abgleichs der Bewegungskenngrößenprofile erkannt, dass eine große Überschneidung der Bewegungskenngrößenprofile vorliegt, wird in zumindest einem Verfahrensschritt 74 eine Verbindungsanfrage, insbesondere eine Pairinganfrage, an den Verbindungspartner, insbesondere an die Kommunikationseinheit 18 der Handwerkzeugmaschine 10 und es wird insbesondere eine Verbindung zwischen den Verbindungspartnern, insbesondere der Handwerkezugmaschine 10 und der externen Einheit 12, aufgebaut.

In zumindest einem Verfahrensschritt 36, 38 erfolgt ein Abgleich von zumindest einer Zeitkenngröße. Die Zeitkenngröße kann als Arbeitszeit, als Uhrzeit, als Nutzungszeit, als Betriebszeit o. dgl. ausgebildet sein, die automatisch erfasst wird und die insbesondere zusammen mit Bewegungskenngrößen gespeichert wird. Beispielsweise ist es denkbar, dass eine Betriebszeit der Kommunikationseinheit 18 der Handwerkzeugmaschine 10 ausgehend von einer Aktivierung der Kommunikationseinheit 18 der Handwerkzeugmaschine 10 erfasst wird und mit einer Betriebszeit der Kommunikationseinheit 20 der externen Einheit 12 abgeglichen wird o. dgl. Wird eine Zeitkenngröße, insbesondere eine Nutzungszeit, eine Betriebszeit o. dgl., überschritten, erfolgt eine Ausgabe an einen Bediener oder an eine Firmenzentrale. Denkbar ist auch, dass in Abhängigkeit von einer Überschreitung eines Grenzwerts einer Zeitkenngröße, einer bedienerspezifischen Kenngröße, einer Umweltkenngröße o. dgl. mittels der externen Einheit 12 ein Bedienbefehl an die Handwerkzeugmaschine 10 sendbar ist, der einen Betrieb unterbricht, eine Leistung reduziert, eine Zusatzfunktion (Schutz- und/oder Komfortfunktion) aktiviert o. dgl. Insbesondere erfolgt in Abhängigkeit von einem Status einer Kommunikationsverbindung zwischen zumindest einem Verbindungspartner, insbesondere der Handwerkzeugmaschine 10, und zumindest einem weiteren Verbindungspartner, insbesondere der externen Einheit 12, eine Übertragung von elektronischen Daten an zumindest einen zusätzlichen Verbindungspartner, insbesondere die Firmenzentrale.

In zumindest einem Verfahrensschritt 40, 42 erfolgt eine Deaktivierung der Kommunikationseinheit 18 der Handwerkzeugmaschine 10 und/oder der Kommunikationseinheit 20 der externen Einheit 12 zumindest in Abhängigkeit von einem Zeitintervall, in dem eine Erfassung von Bewegungskenngrößen ausbleibt. Wird beispielsweise innerhalb eines Zeitintervalls von mehr als 1 Sekunde, vorzugsweise von mehr als 2 Sekunden und besonders bevorzugt von mehr als 10 Sekunden keine Bewegungskenngröße erfasst, wird die Kommunikationseinheit 18 der Handwerkzeugmaschine 10 und/oder die Kommunikationseinheit 20 der externen Einheit 12 deaktiviert, insbesondere in einen Stand-by-Betrieb geschalten.

Es ist denkbar, dass das Verfahren alternative oder zusätzliche Verfahrensschritte aufweist, die ein Fachmann zu einer Durchführung des Verfahrens als sinnvoll erachtet, wie beispielsweise zumindest einen Verfahrensschritt, in dem Verbindungspartner, die abweichende Bewegungskenngrößenprofile aufweisen, eine digitale Markierung erhalten und/oder wie beispielsweise zumindest einen Verfahrensschritt, in dem in Abhängigkeit von einer Anzahl von durchgeführten Abgleichen, die zu keiner Übereinstimmung von Bewegungskenngrößenprofilen führten, eine automatische Deaktivierung oder eine Trennung einer Verbindung erfolgt o. dgl.

## Patentansprüche

1. Verfahren zu einer drahtlosen Übertragung von elektronischen Daten zwischen einer Kommunikationseinheit (18) einer als ein erster Verbindungspartner ausgebildeten Handwerkzeugmaschine (10) und einer Kommunikationseinheit (20) einer als ein zweiter Verbindungspartner ausgebildeten externen Einheit (12),
wobei in einem Verfahrensschritt (14) die Kommunikationseinheit (18) der Handwerkzeugmaschine zur Übertragung der elektronischen Daten in Abhängigkeit von einem Beschleunigungswert und/oder einer Änderung einer Positionskenngröße der Kommunikationseinheit (18) automatisch aktiviert wird,
wobei in einem Verfahrensschritt (16) die Kommunikationseinheit (20) der externen Einheit (12) zur Übertragung der elektronischen Daten in Abhängigkeit von einem Beschleunigungswert und/oder einer Änderung einer Positionskenngröße der Kommunikationseinheit (20) automatisch aktiviert wird,
wobei in einem Verfahrensschritt (30), falls es für eine Kommunikationseinheit noch mehr potentielle Verbindungspartner gäbe, eine Auswahl eines Verbindungspartners (10, 12) aus den potentiellen Verbindungspartnern in Abhängigkeit von der Signaldämpfung und/oder dem Abstand zwischen einem jeweiligen potentiellen Verbindungspartner und einer Kommunikationseinheit (18, 20) erfolgt, wobei in einem Verfahrensschritt (62, 72) eine Verbindung zwischen den Kommunikationseinheiten aufgebaut wird,
wobei ein einem Verfahrensschritt (32) ein Abgleich eines Bewegungskenngrößenprofils der Kommunikationseinheit (18) mit einem Bewegungskenngrößenprofils der Kommunikationseinheit (20) erfolgt, und
wobei in einem Verfahrensschritt (34) in Abhängigkeit von einer Auswertung des Abgleichs eine Beibehaltung oder Trennung der Kommunikationsverbindung der Verbindungspartner (10, 12) erfolgt.

2. Verfahren nach Anspruch 1, **dadurch gekennzeichnet, dass** in einem Verfahrensschritt (22, 24) eine Aufzeichnung des Beschleunigungswerts und/oder der Änderung der lokalen und/oder globalen Positionskenngröße erfolgt.

3. Verfahren nach einem der vorhergehenden Ansprüche, **dadurch gekennzeichnet, dass** in einem Verfahrensschritt (28) nach einer Aktivierung zumindest einer der Kommunikationseinheiten (18, 20) in Abhängigkeit von einem Zeitintervall, in dem der Beschleunigungswert und/oder die Änderung der lokalen und/oder globalen Positionskenngröße erfasst wird, eine Verbindungsanfrage mittels der Kommunikationseinheit (18, 20) gesendet wird.

4. Verfahren nach einem der vorhergehenden Ansprüche, **dadurch gekennzeichnet, dass** in zumindest einem Verfahrensschritt (36, 38) ein Abgleich von jeweils einer Zeitkenngröße der Verbindungspartner (10, 12) erfolgt.

5. Verfahren nach einem der vorhergehenden Ansprüche, **dadurch gekennzeichnet, dass** in Abhängigkeit von einem Status der Kommunikationsverbindung zwischen den Verbindungspartnern (10, 12) eine Übertragung von elektronischen Daten an zumindest einen zusätzlichen Verbindungspartner erfolgt.

6. Verfahren nach einem der vorhergehenden Ansprüche, **dadurch gekennzeichnet, dass** in einem Verfahrensschritt (40, 42) eine Deaktivierung der Kommunikationseinheiten (18, 20) in Abhängigkeit von einem Zeitintervall erfolgt, in dem eine Erfassung der Beschleunigungswerte und/oder Änderung der lokalen und/oder globalen Positionskenngrößen der Verbindungspartner (10, 12) ausbleibt.

## Claims

1. Method for the wireless transmission of electronic data between a communication unit (18) of a hand-held machine tool (10) designed as a first connection partner and a communication unit (20) of an external unit (12) designed as a second connection partner,
wherein, in a method step (14), the communication unit (18) of the hand-held machine tool is activated automatically so as to transmit the electronic data depending on an acceleration value and/or a change in a position parameter of the communication unit (18), wherein, in a method step (16), the communication unit (20) of the external unit (12) is activated automatically so as to transmit the electronic data depending on an acceleration value and/or a change in a position parameter of the communication unit (20), wherein, in a method step (30), if there are even more potential connection partners for a communication unit, a connection partner (10, 12) is chosen from the potential connection partners depending on the signal attenuation and/or the distance between a respective potential connection partner and a communication unit (18, 20),
wherein, in a method step (62, 72), a connection is set up between the communication units,
wherein, in a method step (32), a motion parameter profile of the communication unit (18) is compared with a motion parameter profile of the communication unit (20), and
wherein, in a method step (34), the communication connection between the connection partners (10, 12) is maintained or disconnected depending on an evaluation of the comparison.

2. Method according to Claim 1, **characterized in that,** in a method step (22, 24), the acceleration value and/or the change in the local and/or global position parameter are/is recorded.

3. Method according to either of the preceding claims, **characterized in that,** in a method step (28), a connection request is transmitted by way of the communication unit (18, 20) following activation of at least one of the communication units (18, 20) depending on a time interval in which the acceleration value and/or the change in the local and/or global position parameter are/is recorded.

4. Method according to one of the preceding claims, **characterized in that** a respective time parameter of the connection partners (10, 12) is compared in at least one method step (36, 38).

5. Method according to one of the preceding claims, **characterized in that** electronic data are transmitted to at least one additional connection partner depending on a status of the communication connection between the connection partners (10, 12).

6. Method according to one of the preceding claims, **characterized in that,** in a method step (40, 42), the communication units (18, 20) are deactivated depending on a time interval in which the acceleration values and/or change in the local and/or global position parameters of the connection partners (10, 12) are/is not recorded.

## Revendications

1. Procédé de transmission sans fil de données électroniques entre une unité de communication (18) d'une machine-outil portative (10) réalisée sous la forme d'un premier partenaire de connexion et une unité de communication (20) d'une unité externe (12) réalisée sous la forme d'un deuxième partenaire de connexion,
dans une étape du procédé (14), l'unité de communication (18) de la machine-outil portative étant activée automatiquement pour la transmission des données électroniques en fonction d'une valeur d'accélération et/ou d'une modification d'une grandeur caractéristique de position de l'unité de communication (18),
dans une étape du procédé (16), l'unité de communication (20) de l'unité externe (12) étant activée automatiquement pour la transmission des données électroniques en fonction d'une valeur d'accélération et/ou d'une modification d'une grandeur caractéristique de position de l'unité de communication (20),
dans une étape du procédé (30), dans le cas où il existerait encore plus de partenaires de connexion potentiels pour une unité de communication, une sélection d'un partenaire de connexion (10, 12) parmi les partenaires de connexion potentiels étant effectuée en fonction de l'affaiblissement du signal et/ou de la distance entre un partenaire de connexion potentiel respectif et une unité de communication (18, 20),
dans une étape du procédé (62, 72), une connexion étant établie entre les unités de communication,
dans une étape du procédé (32), un alignement d'un profil de grandeur caractéristique de déplacement de l'unité de communication (18) avec un profil de grandeur caractéristique de déplacement de l'unité de communication (20) étant effectué, et
dans une étape du procédé (34) un maintien ou une déconnexion de la connexion de communication des partenaires de connexion (10, 12) étant effectué(e) en fonction d'une interprétation de l'alignement.

2. Procédé selon la revendication 1, **caractérisé en ce que** dans une étape du procédé (22, 24), un enregistrement de la valeur d'accélération et/ou de la modification de la grandeur caractéristique de position locale et/ou globale est effectué.

3. Procédé selon l'une des revendications précédentes, **caractérisé en ce que** dans une étape du procédé (28), après une activation d'au moins l'une des unités de communication (18, 20) en fonction d'un intervalle de temps dans lequel la valeur d'accélération et/ou la modification de la grandeur caractéristique de position locale et/ou globale est détectée, une demande de connexion est envoyée au moyen de l'unité de communication (18, 20).

4. Procédé selon l'une des revendications précédentes, **caractérisé en ce que** dans au moins une étape du procédé (36, 38), un alignement d'une grandeur caractéristique de temps respective des partenaires de connexion (10, 12) est effectué.

5. Procédé selon l'une des revendications précédentes, **caractérisé en ce qu'**une transmission de données électroniques à au moins un partenaire de connexion supplémentaire est effectuée en fonction d'un état de la connexion de communication entre les partenaires de connexion (10, 12).

6. Procédé selon l'une des revendications précédentes, **caractérisé en ce que** dans une étape du procédé (40, 42), une désactivation des unités de communication (18, 20) est effectuée en fonction d'un intervalle de temps dans lequel une détection des valeurs d'accélération et/ou de la modification des grandeurs caractéristiques de position locales et/ou globales des partenaires de connexion (10, 12) reste désactivée.
